# EUROPEAN PATENT APPLICATION

(11) **EP 1 378 952 A1**
(43) Date of publication of application: **07.01.2004**
(21) Application number: 03252448.0
(22) Date of filing: 17.04.2003
(51) Int. Cl.: H01M 4/88, H01M 4/96, H01M 4/86, H01M 8/10

(54) **Treated gas diffusion backings and their use in fuel cells**

(30) Priority: 22.04.2002 US 374926 P
(71) Applicant: E.I. DU PONT DE NEMOURS AND COMPANY, Wilmington Delaware 19898 (US)
(72) Inventor: Reichert, David L., Boothwyn, Pennsylvania 19061 (US); Fitzgerald, Patrick H., Pitman, New Jersey 08071 (US); Buxton, L. William, Wilmington, Delaware 19802 (US)
(74) Representative: Cockerton, Bruce Roger

(57) **Abstract**

This invention is directed to the use of fluorinated polymeric surface treatment agents in electrochemical applications, particularly in the manufacture of fuel cell components.

## Description

### FIELD OF THE INVENTION

This invention is directed to gas diffusion backings and in particular to treated gas diffusion backings and their electrochemical applications, particularly in the manufacture of fuel cells.

### BACKGROUND OF THE INVENTION

Hydrogen and methanol fuel cells are of considerable importance in the search for new energy technologies. One approach in the development of these fuel cells is to employ solid polymer electrolyte membranes in combination with a catalyst layer and a gas diffusion backing (GDB) layer to form a membrane electrode assembly (MEA). The catalyst layer typically includes a finely divided metal such as platinum, palladium, or ruthenium, or a combination of more than one metal such as platinum-ruthenium, or a metal oxide, such as ruthenium oxide, usually in combination with a binder. In hydrogen fuel cells, the catalyst is normally supported on carbon; in methanol fuel cells, the catalyst is normally unsupported. The gas diffusion backing is typically a highly porous carbon sheet or fabric.

A common problem of hydrogen and direct methanol fuel cells is susceptibility to flooding by excessive water, which introduces mass transport limitations in the reactant and/or product streams, and thereby disrupts the performance of the fuel cell. It is known to incorporate polytetrafluoroethylene (PTFE) or copolymers thereof with hexafluoropropylene or a perfluorovinyl ether in the catalyst layer and gas diffusion backing to impart a degree of hydrophobicity to otherwise hydrophilic structures.

In order to achieve durability, uniformity, and structural integrity, it is usually necessary to sinter the fluoropolymers so employed. The fluoropolymers of the art exhibit crystalline melting points well above 200°C, making it is necessary to perform the sintering at temperatures above 300°C. The heating cycle associated therewith is long and complicated. Furthermore, the high temperature tends to degrade other components of the MEA requiring in practice that the sintering take place before the MEA is assembled.

A need exists for a simplified, economical process for producing gas diffusion backings and MEAs therefrom that does not require a long, complicated sintering of the fluoropolymers incorporated therein at undesirably high temperatures nor employ expensive amorphous fluoropolymer solutions.

### SUMMARY OF THE INVENTION

In a first aspect, the invention provides a hydrophobic fibrous carbon gas diffusion backing (GDB) comprising a porous, conductive sheet material treated with a partially fluorinated polymer selected from the group consisting of acrylic polymers, methacrylic polymers, urethane polymers, and mixtures thereof.

In a second aspect, the invention provides a method for forming a hydrophobic fibrous carbon gas diffusion backings (GDB) comprising treating a porous, conductive sheet material with a partially fluorinated polymer selected from the group consisting of acrylic polymers, methacrylic polymers, urethane polymers and mixtures thereof.

In a third aspect, the invention provides a membrane electrode assembly comprising a hydrophobic fibrous carbon gas diffusion backing, wherein the hydrophobic fibrous carbon gas diffusion backing comprises a porous, conductive sheet material treated with a partially fluorinated polymer selected from the group consisting of acrylic polymers, methacrylic polymers, urethane polymers, and mixtures thereof.

In the third aspect, the invention also provides a membrane electrode assembly further comprising a substantially fluorinated solid polymer electrolyte membrane; and at least one catalyst layer in ionic conductive contact with the membrane.

In a fourth aspect, the invention provides a method for making a membrane electrode assembly comprising:
(a) providing a substantially fluorinated solid polymer electrolyte membrane having a first side and a second side;
(b) forming first and second catalyst layers on the first and second sides of the substantially fluorinated solid polymer electrolyte membrane to form a catalyst coated membrane, and
(c) providing first and second hydrophobic fibrous carbon gas diffusion backings adjacent the first and second catalyst layers of the catalyst coated membrane, wherein the hydrophobic fibrous carbon gas diffusion backing comprises a porous, conductive sheet material treated with a partially fluorinated polymer selected from the group consisting of acrylic polymers, methacrylic polymers, urethane polymers, and mixtures thereof.

In the fourth aspect, the first and second catalyst layers comprise a noble metal catalyst and an ionomeric resin binder.

In a fifth aspect, the invention provides a fuel cell comprising a hydrophobic fibrous carbon gas diffusion backing (GDB), wherein the hydrophobic fibrous carbon gas diffusion backing comprises a porous, conductive sheet material treated with a partially fluorinated polymer selected from the group consisting of acrylic polymers, methacrylic polymers, urethane polymers, and mixtures thereof.

### BRIEF DESCRIPTION OF THE DRAWINGS

Figure 1 is a schematic illustration of the single cell test assembly employed in evaluating the performance of the gas diffusion backing of the invention.
Figure 2 graphical illustration of the voltage and power vs. current density profile for the fuel cell test of Example 4.

### DETAILED DESCRIPTION OF THE INVENTION

This invention provides a method for imparting a hydrophobic nature to gas diffusion electrodes and gas diffusion backings (GDBs) without substantially affecting conductivity or permeability, and the hydrophobic gas diffusion electrodes and gas diffusion backings produced thereby.

This invention further provides catalyst coated membrane electrode assemblies (MEAs) utilizing said hydrophobic gas diffusion electrodes and/or gas diffusion backings and the process of preparing same.

### Hydrophobic Gas Diffusion Backing:

The hydrophobic gas diffusion backings **(13)** may comprise a porous conductive sheet material such as paper or cloth made from woven or non-woven carbon fiber. Some useful porous conductive sheet materials include, but are not limited to, graphite papers obtainable from Toray (Tokyo, Japan), Spectracorp (Lawrence, MA), Lydall Inc. (Manchester, CT) or SGL Carbon (Wiesbaden, Germany) and Zoltek® carbon cloth obtainable from Zoltek Companies, Inc (St. Louis, MO). A microporous layer that may be applied to the porous conductive sheet materials may comprise a coating of carbon particles and a hydrophobic binder. For example, carbon particles such as Vulcan XC-72 may be mixed with a hydrophobic binder such as polyvinylidene diflouride (PVDF), e.g. Kynar®, or a sulfonyl fluoride copolymer, e.g. Nafion®.

By the method of the present invention, the porous conductive sheet material of the gas diffusion backing or the gas diffusion electrode, typically conductive carbon cloth or graphite paper, is treated with a surface-treating agent. The surface treating agent is a partially fluorinated polymer selected from the group consisting of acrylic, methacrylic, urethane polymers, and mixtures thereof. This surface-treating agent offers a low cost method for imparting hydrophobicity to carbon cloth and graphite paper substrates without significantly altering the conductivity or permeability of the substrate. Further, the ease of application offers advantages over methods known in the art that may include, for example, high temperature sintering of fluoropolymers. This surface treatment also results in substantially reducing flooding of the gas diffusion backing. Since the gas diffusion backing must be able to carry current, typically through the plane of the article, the surface treatment should have minimal impact on conductivity. Since the gaseous or liquid reactants must be able to diffuse though the gas diffusion backing, it is a practical imperative that there is minimal impact of the method used to impart hydrophobicity on permeability. Any resultant limitations on mass transport could severely limit cell performance.

Additionally, if a microporous layer is desired, binders that do not require a sintering step are preferred. Some useful hydrophobic binders that do not require sintering include polyvinylidene diflouride (PVDF) such as Kynar® or sulfonyl fluoride copolymer such as Nafion®.

The method for applying the surface-treating agent may be by dipping, spraying, padding or another method familiar to those skilled in the art of applying treatment agents to paper or cloth articles..

For the purpose of the present invention, the term surface-treating agent implies materials of the type used as water or stain repellents for textiles, carpets, wallcoverings, etc., of which there are many commercial examples. Although these may be polymer solutions, they are more typically aqueous dispersions of partially fluorinated polymers selected from the group consisting of acrylic, methacrylic, urethane polymers, and mixtures thereof. Typically these partially fluorinated acrylic, methacrylic or urethane polymers have fluorinated alkyl side chains with a length of about 4 to about 20 carbon atoms, preferably averaging about 6 to 10 fluorinated carbons per chain. These side chains will ideally have fully fluorinated end groups (CF₃-), and are typically connected to the polymers functionality with spacer groups. They are normally depicted as CF₃-(CF₂)ₙ-X-, where n = 3- 17, and where X may be any suitable bridging group, but is typically -(CH₂)ₚ-, or -SO₂-NR-, wherein p = 1-6, preferably 2, and R = CH₃-, or CH₃-CH₂-. -The active polymer in the surface treating agents of the invention are preferably comprised of at least about 60% of a fluorinated acrylate, methacrylate, or alcohol (for the urethanes) monomer. Some useful surface treating agents are disclosed in US 4, 742,140 and US 4,564,561.

Some useful surface treating agents include, but are not limited to, fluorinated repellents sold under trade names Scotchgard∼ (3M Company, St. Paul, Minn.), Zonyl® fluorinated polymeric surface treating agents from the DuPont Company (Wilmington, DE). Hydrophobol® (CIBA Specialty Chem., High Point NC), AsahiGuard® (Asahi Glass, Tokyo, Japan), Unidyne® (Daikin Industries, Osaka, Japan), and Sequapel® (Sequa Corporation, New York, NY).

In a typical embodiment, the gas diffusion backing of the invention is formed in a pad-bath applicator, which passes the fabric through an aqueous bath of the partially fluorinated polymer and then through squeeze rolls to give uniform treatment. Isopropanol (10% by weight) may advantageously be used in the baths to improve wetting. 77%-wet pick up (WPU) was achieved by this method.

Thus, with 3.3% by weight of the aqueous bath comprising Zonyl® 7040, a fluorinated polymeric dispersion, (which is 18% solids, 6% Fluorine), about 1500 ppm fluorine on the fabric is obtained. Higher loadings, were obtained by increasing the bath concentration of the partially fluorinated polymer surface treating agent.

After treatment, the fabrics were dried (and cured) for 2 minutes at 300°F (148.89°C) in a forced air oven. Typically, for best performance of these surface-treating agents, the surface temperature of the treated article must be raised to at least 60-80°C, and more typically, above 100°C, after drying.

### Gas Diffusion Electrode:

Gas diffusion electrodes are prepared by applying at least one catalyst layer to the hydrophobic gas diffusion backings. The catalyst layer that may be applied to the gas diffusion backing, before or after treatment with the partially fluorinated polymer, is applied from an electrocatalyst coating composition.

### Electrocatalyst Coating Composition:

Typically, the electrocatalyst coating composition comprises an anode or cathode catalyst, a binder such as an ion exchange polymer, and a solvent. Since the ion exchange polymer employed in the electrocatalyst coating composition serves not only as binder for the electrocatalyst particles but also assists in securing the electrode to the membrane, it is preferable for the ion exchange polymers in the composition to be compatible with the ion exchange polymer in the membrane. Most typically, ion exchange polymers in the composition are the same type as the ion exchange polymer in the membrane used to form the catalyst coated membrane (CCM).

Catalysts in the composition are selected based on the particular intended application for the gas diffusion backing electrode. Electrocatalysts suitable for use in the present invention include one or more platinum group metal such as platinum, ruthenium, rhodium, and iridium and electroconductive oxides thereof, and electroconductive reduced oxides thereof. The catalyst may be supported or unsupported. For direct methanol fuel cells, a (Pt-Ru)OX electocatalyst has been found to be useful. One particularly typical catalyst composition for hydrogen fuel cells is platinum on carbon. For example, 60 wt % carbon, 40 wt % platinum that is obtainable from E-Tek Corporation Natick, MA, when employed in accordance with the procedures described herein, provided particles in the electrode which are less than 1 µm in size. Ion exchange polymers for use in accordance with the present invention are typically highly fluorinated ion-exchange polymers. "Highly fluorinated" means that at least 90% of the total number of univalent atoms in the polymer are fluorine atoms. Most typically, the polymer is perfluorinated. It is also typical for use in fuel cells for the polymers to have sulfonate ion exchange groups. The term "sulfonate ion exchange groups" is intended to refer to either sulfonic acid groups or salts of sulfonic acid groups, typically alkali metal or ammonium salts. For applications where the polymer is to be used for proton exchange as in fuel cells, the sulfonic acid form of the polymer is typical. If the polymer in the electrocatalyst coating composition is not in sulfonic acid form when used, a post treatment acid exchange step will be required to convert the polymer to acid form prior to use.

Typically, the ion exchange polymer employed comprises a polymer backbone with recurring side chains attached to the backbone with the side chains carrying the ion exchange groups. Possible polymers include homopolymers or copolymers of two or more monomers. Copolymers are typically formed from one monomer which is a nonfunctional monomer and which provides carbon atoms for the polymer backbone. A second monomer provides both carbon atoms for the polymer backbone and also contributes the side chain carrying the cation exchange group or its precursor, e.g., a sulfonyl halide group such a sulfonyl fluoride (-SO₂F), which can be subsequently hydrolyzed to a sulfonate ion exchange group. For example, copolymers of a first fluorinated vinyl monomer together with a second fluorinated vinyl monomer having a sulfonyl fluoride group (-SO₂F) can be used. Possible first monomers include tetrafluoroethylene (TFE), hexafluoropropylene, vinyl fluoride, vinylidine fluoride, trifluoroethylene, chlorotrifluoroethylene, perfluoro (alkyl vinyl ether), and mixtures thereof. Possible second monomers include a variety of fluorinated vinyl ethers with sulfonate ion exchange groups or precursor groups that can provide the desired side chain in the polymer. The first monomer may also have a side chain that does not interfere with the ion exchange function of the sulfonate ion exchange group. Additional monomers can also be incorporated into these polymers if desired.

Typical polymers include a highly fluorinated, most typically a perfluorinated, carbon backbone with a side chain represented by the formula -(O-CF₂CFR_{*f*})ₐ-O-CF₂CFR'_{*f*}SO₃H, wherein R_{*f*} and R'_{*f*} are independently selected from F, Cl or a perfluorinated alkyl group having 1 to 10 carbon atoms, a = 0, 1 or 2. The typical polymers include, for example, polymers disclosed in U.S. Patent 3,282,875 and in U.S. Patents 4,358,545 and 4,940,525. One typical polymer comprises a perfluorocarbon backbone and the side chain is represented by the formula:

-O-F₂CF(CF₃)-O-CF₂CF₂SO₃H.

Polymers of this type are disclosed in U.S. Patent 3,282,875 and can be made by copolymerization of tetrafluoroethylene (TFE) and the perfluorinated vinyl ether CF₂=CF-O-CF₂CF(CF₃)-O-CF₂CF₂SO₂F, perfluoro(3,6-dioxa-4-methyl-7-octenesulfonyl fluoride) (PDMOF), followed by conversion to sulfonate groups by hydrolysis of the sulfonyl fluoride groups and ion exchanging to convert to the acid, also known as the proton form. One typical polymer of the type disclosed in U.S. Patents 4,358,545 and 4,940,525 has the side chain -O-CF₂CF₂SO₃H. This polymer can be made by copolymerization of tetrafluoroethylene (TFE) and the perfluorinated vinyl ether CF₂=CF-O-CF₂CF₂SO₂F, perfluoro(3-oxa-4-pentenesulfonyl fluoride) (POPF), followed by hydrolysis and acid exchange.

For perfluorinated polymers of the type described above, the ion exchange capacity of a polymer can be expressed in terms of ion exchange ratio ("IXR"). Ion exchange ratio is defined as number of carbon atoms in the polymer backbone in relation to the ion exchange groups. A wide range of IXR values for the polymer is possible. Typically, however, the IXR range for perfluorinated sulfonate polymer is usually about 7 to about 33. For perfluorinated polymers of the type described above, the cation exchange capacity of a polymer is often expressed in terms of equivalent weight (EW). For the purposes of this application, equivalent weight (EW) is defined to be the weight of the polymer in acid form required for the neutralization of one equivalent of NaOH. In the case of a sulfonate polymer where the polymer comprises a perfluorocarbon backbone and the side chain is -O-CF₂-CF(CF₃)-O-CF₂-CF₂-SO₃H (or a salt thereof), the equivalent weight range which corresponds to an IXR of about 7 to about 33 is about 700 EW to about 2000 EW. A typical range for IXR for this polymer is about 8 to about 23 (750 to 1500 EW), most typically about 9 to about 15 (800 to 1100 EW).

The liquid medium for the electrocatalyst coating composition is one selected to be compatible with the process. It is advantageous for the medium to have a sufficiently low boiling point that rapid drying of electrode layers is possible under the process conditions employed, provided however, that the composition cannot dry so fast that the composition dries on the substrate before transfer to the membrane. When flammable constituents are to be employed, the selection should take into consideration any process risks associated with such materials, especially since they will be in contact with the catalyst in use. The medium should also be sufficiently stable in the presence of the ion exchange polymer that, in the acid form, has strong acidic activity. The liquid medium typically will be polar since it should be compatible with the ion exchange polymer in the electrocatalyst coating composition and be able to "wet" the membrane. While it is possible for water to be used as the liquid medium, it is preferable for the medium to be selected such that the ion exchange polymer in the composition is "coalesced" upon drying and not require post treatment steps such as heating to form a stable electrode layer.

A wide variety of polar organic liquids or mixtures thereof can serve as suitable liquid media for the electrocatalyst coating composition. Water in minor quantity may be present in the medium if it does not interfere with the coating process. Some typical polar organic liquids have the capability to swell the membrane in large quantity although the amount of liquids the electrocatalyst coating composition applied in accordance with the invention is sufficiently limited that the adverse effects from swelling during the process are minor or undetectable. It is believed that solvents with the capability to swell the ion exchange membrane can provide better contact and more secure application of the electrode to the membrane. A variety of alcohols are well suited for use as the liquid medium.

Typical liquid media include suitable C₄ to C₈ alkyl alcohols such as n-, iso-, sec- and tert-butyl alcohols; the isomeric 5-carbon alcohols such as 1, 2- and 3-pentanol, 2-methyl-1-butanol, 3-methyl, 1-butanol, etc.; the isomeric 6-carbon alcohols, such as 1-, 2-, and 3-hexanol, 2-methyl-1-pentanol, 3-methyl-1-pentanol, 2-methyl-1-pentanol, 3-methyl, 1-pentanol, 4-methyl-1-pentanol, etc.; the isomeric C₇ alcohols and the isomeric C₈ alcohols. Cyclic alcohols are also suitable. Typical alcohols are n-butanol and n-hexanol. Most typical is n-hexanol.

The amount of liquid medium in the anode electrocatalyst will vary with the type of medium employed, the constituents of the composition, the type of coating equipment employed, desired electrode thickness, process speeds etc. The amount of liquid employed is highly dependent on viscosity of the electrocatalyst coating composition that is very important to achieve high quality electrodes with a minimum of waste.

Handling properties of the electrocatalyst coating composition, e.g. drying performance, can be modified by the inclusion of compatible additives such as ethylene glycol or glycerin up to 25 % by weight based on the total weight of liquid medium.

It has been found that the commercially available dispersion of the acid form of the perfluorinated sulfonic acid polymer, sold by E.I. du Pont de Nemours and Company under the trademark Nafion®, in a water/alcohol dispersion, may be used as starting material to prepare the electrocatalyst coating composition. Using this ion exchange polymer containing dispersion as base for the electrocatalyst coating composition, the anode or cathode electrocatalyst required to form an electrode can be added which yields a coating composition with excellent application properties.

In the electrocatalyst coating composition, it is preferable to adjust the amounts of electrocatalyst, ion exchange polymer and other components, if present, so that the electrocatalyst is the major component by weight of the resulting electrode. Most preferably, the weight ratio of electrocatalyst to ion exchange polymer in the electrode is about 2:1 to about 10:1.

Utilization of the known electrocatalyst coating techniques may produce a wide variety of applied layers which can be of essentially any thickness ranging from very thick, e.g., 20 µm or more very thin, e.g., 1 µm or less.

### Fuel Cell:

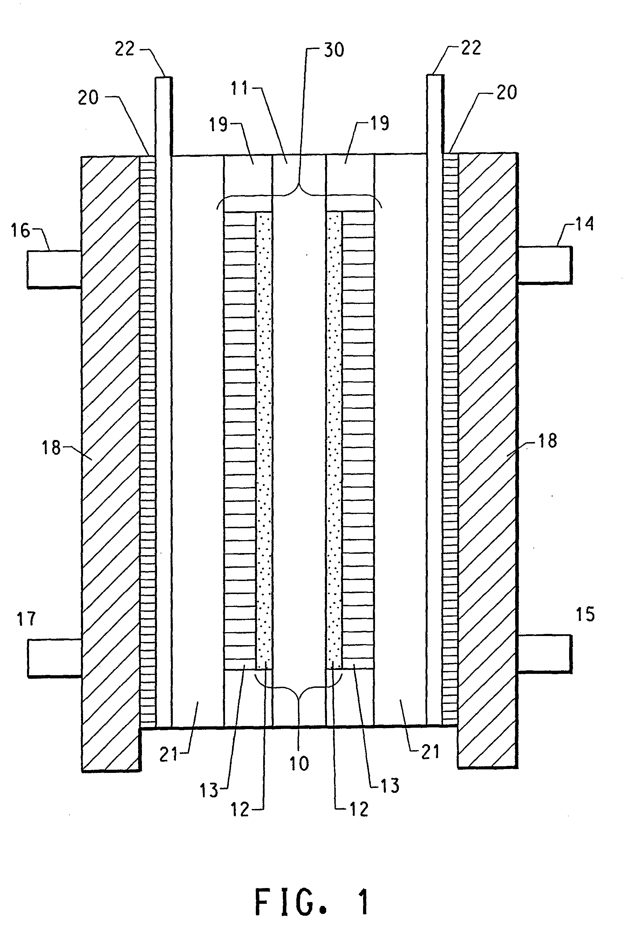

As shown in Figure 1, the gas diffusion backing (GDB) or electrode (13) thus formed may be used, as such, in a fuel cell in combination with a catalyst coated membrane (CCM) (10) to form an unconsolidated membrane electrode assemble (MEA). The catalyst coated membrane (10) comprises a ion exchange polymer membrane (11) and catalyst layers or electrodes (12) formed from a electrocatalyst coating composition.

### Catalyst Coated Membrane (CCM):

A variety of techniques are known for CCM manufacture which apply an electrocatalyst coating composition similar to that described above onto an ion exchange polymer membrane. Some known methods include spraying, painting, patch coating and screen, decal, pad or flexographic printing.

### Ion Exchange Polymer Membrane:

Membranes for use as the ion exchange membrane **(11)** may be any of the known membranes. One such membrane for use in preparing a catalyst-coated membrane (CCM) may be a membrane of the same ion exchange polymers discussed above for use in the electrocatalyst coating compositions. The membranes may typically be made by known extrusion or casting techniques and have thicknesses which may vary depending upon the application, and typically have a thickness of 350 µm or less. The trend is to employ membranes that are quite thin, i.e., 50 µm or less. While the polymer may be in alkali metal or ammonium salt form, it is typical for the polymer in the membrane to be in acid form to avoid post treatment acid exchange steps. Suitable perfluorinated sulfonic acid polymer membranes in acid form are available under the trademark Nafion® by E.I. du Pont de Nemours and Company.

Reinforced perfluorinated ion exchange polymer membranes can also be utilized in CCM manufacture. Reinforced membranes may be made by impregnating porous, expanded PTFE (ePTFE) with ion exchange polymer. ePTFE is available under the tradename "Goretex" from W. L. Gore and Associates, Inc., Elkton MD, and under the tradename "Tetratex" from Tetratec, Feasterville PA. Impregnation of ePTFE with perfluorinated sulfonic acid polymer is disclosed in U.S. Patents 5,547,551 and 6,110,333.

Alternately, the ion exchange membrane (**11**) may be a porous support for the purposes of improving mechanical properties, for decreasing cost and/or other reasons. The porous support may be made from a wide range of components, for e.g., hydrocarbons such as a polyolefin, e.g., polyethylene, polypropylene, polybutylene, copolymers of those materials, and the like. Perhalogenated polymers such as polychlorotrifluoroethylene may also be used. The membrane may also be made from a polybenzimadazole polymer. This membrane may be made by casting a solution of polybenzimadazole in phosphoric acid (H₃PO₄) doped with trifluoroacetic acid (TFA) as described in US Patent Nos. 5,525,436; 5,716,727, 6,025,085 and 6,099,988.

In one embodiment of the invention, the MEA (**30**) may be prepared by thermally consolidating the GDB of the invention with a CCM at a temperature of under 200°C, preferably 140-160°C. The CCM may be made of any type known in the art. In this embodiment, an MEA comprises a solid polymer electrolyte (SPE) membrane with a thin catalyst- binder layer disposed thereon. The catalyst may be supported (typically on carbon) or unsupported. In one method of preparation, a catalyst film is prepared as a decal by spreading the catalyst ink on a flat release substrate such as Kapton® polyimide film (available from the DuPont Company). After the ink dries, the decal is transferred to the surface of the SPE membrane by the application of pressure and heat, followed by removal of the release substrate to form a catalyst coated membrane (CCM) with a catalyst layer having a controlled thickness and catalyst distribution. Alternatively, the catalyst layer is applied directly to the membrane, such as by printing, and then the catalyst film is dried at a temperature not greater than 200°C.

The CCM, thus formed, is then combined with a GDB of the invention, to form the MEA of the present invention. The MEA is formed, by layering the CCM and the GDB, wherein at least one GDB comprises a fluorinated polymeric surface treating agent followed by consolidating the entire structure in a single step by heating to a temperature no greater than 200°C, preferably in the range of 140-160°C, and applying pressure. Both sides of the MEA can be formed in the same manner and simultaneously. Also, the composition of the catalyst layer and GDB could be different on opposite sides of the membrane.

### EXAMPLES

### EXAMPLE 1:

Carbon cloth, (Zoltek®) was treated with a fluorinated polymeric surface treating agent in a pad-bath applicator, which passes the fabric through an aqueous bath, and then through squeeze rolls to give uniform treatment. Isopropanol, 10% by weight was used in the pad bath to improve wetting. 77% Wet pick-up was obtained. Thus, with about 3.3% by weight of a bath of Zonyl® 7040 (which is 18% solids, 6% Fluorine), about 2000 ppm fluorine on the fabric was obtained. After treatment, the fabrics were dried (and cured) for 2 minutes at 300°F (148.89°C) in a forced air oven for form a gas diffusion backing (**13**).

The gas diffusion backing (**13**) repelled water and isopropanol. The apparatus X-ray mapping shows the fluorine to be evenly distributed, but not a continuous fluoropolymer layer. Conductivity was measured using a 4-point probe consisting of 3 concentric rings and a center post mounted onto a 1-kg mass. The outer ring and post were used to connect to a power supply and the other 2 rings were connected to a voltmeter. The current and voltage drop were measured and the resistance calculated using Ohm's Law and the radial geometry of the probe. The conductivity was measured to be 71.9 ±2.3 S/cm. For comparison, the conductivity of ELAT diffusion backing from E-Tek, was 77.7 ±3.4 S/cm measured on the microporous layer side and 76.1 ±3.0 S/cm on the side without the microporous layer.

### EXAMPLE 2:

Example 1 was repeated with the following exception: Zonyl® 8300 was used as the fluorinated polymeric surface-treating agent instead of Zonyl® 7040. The gas diffusion backing **(13)** repelled water but not isopropanol, so it was retreated with Zonyl® 7040. The conductivity was measured to be 70.7 ±0.1 S/cm using the four point probe described in example 1.

### EXAMPLE 3:

A CCM **(10)** was prepared using the following procedure:

A 3.5% solids solution of unhydrolyzed 940EW Nafion® perfluoro ionomer resin (DuPont Company, Wilmington, DE) was formed by combining 586 g of the Nafion® resin with 16,455 g of Fluorinert® FC-40 perfluorinated solvent (3M Company, Minneapolis, MN) in a 12 L round bottom flask equipped with a stirrer and a water-cooled reflux condenser. The mixture was stirred at 500 rpm for 16 hours at room temperature followed by refluxing at 145°C for 4 hours. The resulting solution was cooled and filtered into a 5-gallon plastic pail. A 5 gram sample was dried to determine solids content.

The anode ink was prepared from 29 g of the Nafion® solution combined with 9 grams of platinum ruthenium (Johnson Mathey) to form a catalyst ink. The cathode ink was 29 g of the Nafion® solution combined with 9 grams of platinum (Johnson Mathey) to form a catalyst ink. Each mixture was milled for 30 minutes, at room temperature, in an Eiger Mini 100-bead mill (Eiger Machinery Co., Mondelein, IL) containing 1.0-1.25 mm zirconia beads. Following milling, the particle size was determined to be less than 1 micrometer using a fineness of grind gauge, Model 52S2 (Precision Gauge and tool Company, Dayton, OH) and the % solids was in the range 20 ―30%.

A 10.2 cm x 10.2 cm piece of 76 µm thick Kapton ® polyimide film (DuPont Company, Wilmington DE), was placed on a flat vacuum board after its weight was recorded. Another piece of 76 µm thick Kapton® polyimide film with a 7.1 cm x 7.1 cm window cut out of it was placed on top of the first piece making sure that the open window in the second piece of film was centered on the first piece. The second piece was slightly bigger than the first to have at least part of it in direct contact with the vacuum board. Using a disposable pipette, a small amount (about 10 cc) of the anode or cathode ink was put on the second Kapton® film just above the open window. With a doctor blade the ink was drawn down so as to fill the area of the open window. The top film was then carefully removed and the ink deposited on the first film was air dried for several hours until the solvent had completely evaporated thereby forming a catalyst coated decal. A wet coating thickness of about 76 µm typically resulted in a catalyst loading of 0.3 mg Pt/cm 2 in the final CCM. Two such decals were prepared, one with an anode ink and a second with a cathode ink.

A 10.2 cm x 10.2 cm piece of wet, acid-exchanged Nafion® N 117 perfluoro ionomer membrane (DuPont Company, Wilmington DE) was sandwiched between two catalyst coated decals formed as described above. Care was taken to ensure that the coatings on the two decals prepared from the cathode and anode inks were registered with each other and were positioned facing the membrane. The assembly so formed was introduced between the 20.3 cm x 20.3 cm platens of a hydraulic press preheated to 160°C. The press was closed and brought to a ram force of 22000 N. The sandwich assembly was kept under pressure for about 2 mins and then cooled for about 2 mins still under pressure. The assembly was removed from the press and the Kapton® pieces were slowly peeled off revealing that all the catalyst coating had transferred to the membrane to form an electrode. The CCM (**10**) thus formed was immersed in a tray of room temperature water (to ensure that the membrane was completely wet) and carefully transferred to a zipper bag for storage and future use.

Prior to forming an MEA (**30**) therewith, in order to hydrolyze the Nafion® in the electrocatalyst coating composition, the so formed CCM was placed between two layers of PTFE lab matting (obtained from Cole-Parmer Instrument Company, Vernon Hills, IL 60061, Catalog No. E-09406-00) and immersed in a 30 wt % NaOH solution at 80°C for 30 mm. The solution was stirred to assure uniform hydrolyses. After 30 minutes in the bath, the CCM was removed and rinsed completely with fresh deionized water to remove all the NaOH.

The thus hydrolyzed CCM, still in Teflon® matting, was then immersed in a 15 wt % nitric acid solution at a temperature of 65°C for 45 minutes. The solution was stirred to assure uniform acid exchange. This procedure was repeated in a second bath containing 15 wt % Nitric acid solution at 65°C and for 45 minutes. The CCM was then rinsed in flowing deionized water for 15 minutes at room temperature to ensure removal of all the residual acid. It was then packaged wet until needed.

### EXAMPLE 4: Fuel Cell Tests

Figure 1 schematically illustrates a single cell test assembly. Fuel cell test measurements were made employing a single cell test assembly obtained from Fuel Cell Technologies Inc, New Mexico. As shown in Figure 1, a CCM **(10)** was used comprising a Nafion® perfluorinated ion exchange membrane **(11)**; and electrodes **(12)**, prepared from a platinum/ruthenium catalyst and Nafion® binder on the anode side, and a platinum-supported on carbon particle catalyst and Nafion® binder on the cathode side. The MEA (**30**) comprised the CCM (**10**) and gas diffusion backings **(13)**, prepared as described in Examples 1 to 3. The anode gas diffusion backing (**13**) comprised carbon cloth and a fluorinated polymeric surface treating agent. The cathode diffusion backing comprised an ELAT with a single microporous layer from E-Tek . The microporous layer was disposed toward the cathode catalyst. The test assembly shown in Figure 1 was also equipped with anode gas inlet **(14)**, anode gas outlet **(15)**, cathode gas inlet (**16**), cathode gas outlet (**17**), aluminum end blocks (**18**), tied together with tie rods (not shown), gasket for sealing (**19**), electrically insulating layer, (**20**), graphite current collector blocks with flow fields for gas distribution, (**21**), and gold plated current collectors, (**22**).

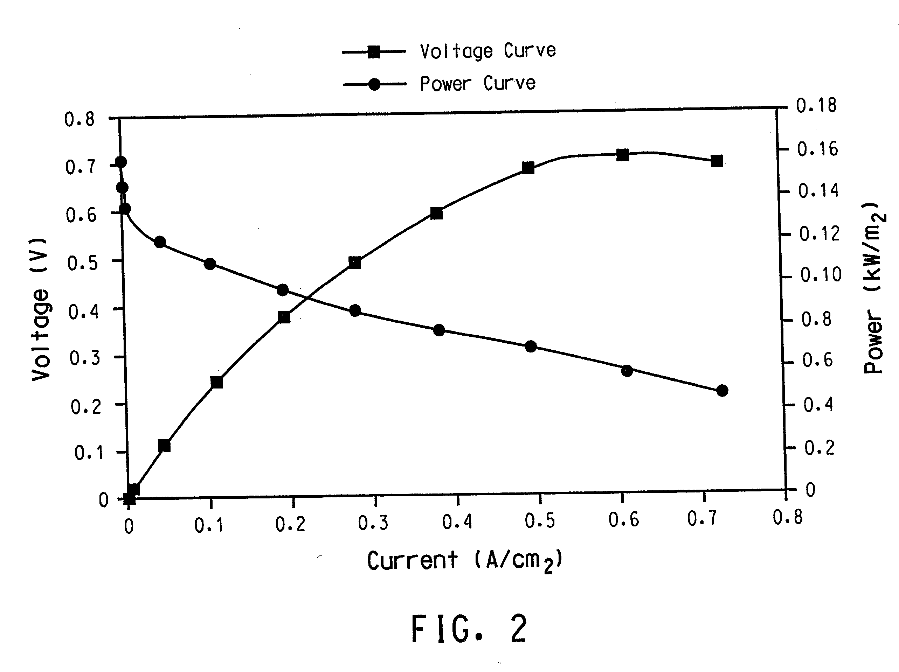

Fuel cell performance was determined under the following conditions: 1 M MeOH (25 cc/mm) and air (3000 cc/mm at 0 psi) were passed into the anode and cathode side of the fuel cell respectively. The current was observed by varying the potential of the cell at a given temperature. The current for the unit area is calculated from the total current obtained and dividing by the 25 cm² area of the cell. The potential vs. current density and power vs. current density plots for the fuel cell are shown in Figure 2. The plots show that the diffusion backing of this invention enables a fuel cell to perform its primary function of generating power.

## Claims

1. A hydrophobic fibrous carbon gas diffusion backing (GDB) comprising a porous, conductive sheet material treated with a partially fluorinated polymer selected from the group consisting of acrylic polymers, methacrylic polymers, urethane polymers, and mixtures thereof.

2. The gas diffusion backing of claim 1 wherein the porous conductive sheet material is paper or cloth made from woven or non-woven carbon fiber.

3. The gas diffusion backing of claim 1 further comprising a microporous layer coating of carbon particles and a hydrophobic binder.

4. The gas diffusion backing of claim 3 wherein the binder is unhydrolyzed perfluoro ionomer resin or polyvinylidene diflouride (PVDF).

5. The gas diffusion backing of claim 1 wherein the partially fluorinated polymer comprises fluorinated alkyl side chains with a length of about 4 to about 20 carbon atoms.

6. The gas diffusion backing of claim 5 wherein the fluorinated alkyl side chains are represented by the structure:
CF₃-(CF₂)ₙ-X-
wherein
n = 3 - 17, and
X may be any suitable bridging group.

7. The gas diffusion backing of claim 6 wherein X is -(CH₂)ₚ-, or -SO₂-NR-
wherein
p = 1-6, and
R = CH₃-, or CH₃-CH₂

8. The gas diffusion backing of claim 1 wherein the partially fluorinated polymer comprises at least about 60% of a fluorinated acrylate, methacrylate or urethane monomer.

9. The gas diffusion backing of claim 1 wherein the partially fluorinated polymer is applied by dipping, spraying or padding.

10. A method for forming a hydrophobic fibrous carbon gas diffusion backings (GDB) comprising treating a porous, conductive sheet material with a partially fluorinated polymer selected from the group consisting of acrylic polymers, methacrylic polymers, urethane polymers and mixtures thereof.

11. The method of claim 10 wherein treating is accomplished by dipping, spraying or padding.

12. The method of claim 10 wherein the partially fluorinated polymer comprises fluorinated alkyl side chains with a length of about 4 to about 20 carbon atoms.

13. The method of claim 12 wherein the fluorinated alkyl side chains are represented by the structure:
CF₃-(CF₂)ₙ-X-
wherein
n = 3 - 17, and
X may be any suitable bridging group.

14. The method of claim 13 wherein X is -(CH₂)ₚ-, or -SO₂-NR-, wherein
p = 1-6, and
R = CH₃-, or CH₃-CH₂

15. The method of claim 10 wherein the partially fluorinated polymer comprises at least about 60% of a fluorinated acrylate, methacrylate or urethane monomer.

16. A membrane electrode assembly comprising a hydrophobic fibrous carbon gas diffusion backing, wherein the hydrophobic fibrous carbon gas diffusion backing comprises a porous, conductive sheet material treated with a partially fluorinated polymer selected from the group consisting of acrylic polymers, methacrylic polymers, urethane polymers, and mixtures thereof.

17. The membrane electrode assembly of claim 16 further comprising a substantially fluorinated solid polymer electrolyte membrane; and at least one catalyst layer in ionic conductive contact with the membrane.

18. The membrane electrode assembly of claim 16 wherein the partially fluorinated polymer comprises fluorinated alkyl side chains with a length of about 4 to about 20 carbon atoms.

19. The membrane electrode assembly of claim 18 wherein the fluorinated alkyl side chains are represented by the structure:
CF₃-(CF₂)ₙ-X-
wherein
n = 3 - 17, and
X may be any suitable bridging group.

20. The membrane electrode assembly of claim 19 wherein X is -(CH₂)ₚ-, or -SO₂-NR-, wherein
p = 1-6, and
R = CH₃-, or CH₃-CH₂

21. The membrane electrode assembly of claim 16 wherein the partially fluorinated polymer comprises at least about 60% of a fluorinated acrylate, methacrylate or urethane monomer.

22. The membrane electrode assembly of claim 17 wherein the substantially fluorinated solid polymer electrolyte membrane is a per fluorinated sulfonic acid polymer membrane.

23. The membrane electrode assembly of claim 17 wherein the substantially fluorinated solid polymer electrolyte membrane is a reinforced per fluorinated ion exchange membrane.

24. The membrane electrode assembly of claim 23 wherein the reinforced per fluorinated ion exchange membrane is expanded-PTFE with an ion exchange polymer impregnated therein.

25. The membrane electrode assembly of claim 24 wherein the ion exchange polymer is a per fluorinated sulfonic acid polymer.

26. A method for making a membrane electrode assembly comprising:
(a) providing a substantially fluorinated solid polymer electrolyte membrane having a first side and a second side;
(b) forming first and second catalyst layers on the first and second sides of the substantially fluorinated solid polymer electrolyte membrane to form a catalyst coated membrane, and
(c) providing first and second hydrophobic fibrous carbon gas diffusion backings adjacent the first and second catalyst layers of the catalyst coated membrane, wherein the hydrophobic fibrous carbon gas diffusion backing comprises a porous, conductive sheet material treated with a partially fluorinated polymer selected from the group consisting of acrylic polymers, methacrylic polymers, urethane polymers, and mixtures thereof.

27. The method of claim 26 wherein the first and second catalyst layers comprise a noble metal catalyst and an ionomeric resin binder.

28. A fuel cell comprising a hydrophobic fibrous carbon gas diffusion backing (GDB), wherein the hydrophobic fibrous carbon gas diffusion backing comprises a porous, conductive sheet material treated with a partially fluorinated polymer selected from the group consisting of acrylic polymers, methacrylic polymers, urethane polymers, and mixtures thereof.
